# FASCICULE DE BREVET EUROPEEN

(11) **EP 0 233 119 B1**
(45) Date de publication et mention de la délivrance du brevet: **18.12.1996**
(21) Numéro de dépôt: 87400266.0
(22) Date de dépôt: 05.02.1987
(51) Int. Cl.: C08F 292/00, C08F 2/44, C08K 9/04

(54) **Procédé d'obtention, par greffage chimique, d'une composition et composition obtenue**
Verfahren zur Herstellung einer Zusammensetzung durch Pfropfung und hergestellte Zusammensetzung
Process for the preparation of a composition by chemical grafting, and composition obtained

(30) Priorité: 10.02.1986 FR 8601759
(43) Date de publication de la demande: 19.08.1987
(73) Titulaire: Farge, Hervé Marie Jacques, F-78310 Elancourt (FR); Farge, Jean Marie Louis, F-95300 Pontoise (FR)
(72) Inventeur: Farge, Hervé Marie Jacques, F-78310 Elancourt (FR); Farge, Jean Marie Louis, F-95300 Pontoise (FR)
(74) Mandataire: Dawidowicz, Armand

(56) Documents cités:
- EP-A- 0 018 558
- FR-A- 1 353 675
- FR-A- 1 399 049
- FR-A- 2 124 800
- FR-A- 2 273 035
- GB-A- 2 090 602
- US-A- 3 324 074
- US-A- 3 471 439
- US-A- 3 897 586
- N.L. Allinger et al., Chimie organique, Volume II: Réactions, Groupe McGraw-Hill, Paris, 1976, 479-481, 605

## Description

La présente invention concerne un mélange de composés permettant l'obtention d'une composition liquide stable, pouvant, sous certaines conditions, durcir après une polymérisation éventuelle ainsi que le procédé d'obtention de ladite composition par greffage chimique.

En d'autres termes, le mélange de l'invention permet, à partir d'un certain nombre de produits sélectionnés et selon un procédé de mise en oeuvre particulier, de dissocier et de contrôler l'opération de greffage chimique et l'opération de polymérisation, en effectuant ce greffage chimique avant toute opération éventuelle de polymérisation.

Suivant le mélange de l'invention, on va donc pouvoir obtenir,
- soit une composition liquide stable, éventuellement polymérisable, mais non polymérisée ;
- soit une composition solide polymérisée obtenue par polymérisation de la composition liquide précitée.

La composition qui polymérise peut, quant à elle et conformément à l'invention, présenter des sites disponibles (c'est-à-dire offrir des liaisons libres au niveau de certains des atomes qui la constituent), sur lesquels sites
- peut venir, après polymérisation, se fixer chimiquement une résine, de façon par exemple à constituer un "gel-coat", ou encore
- peuvent venir adhérer, toujours chimiquement, des fibres de renfort par imprégnation au cours de la polymérisation. On obtient alors une structure composite.

On appellera "gel-coat" une couche mince qui, après avoir été projetée au fond d'un moule et avoir épousé la forme de celui-ci a été recouverte par un support auquel elle se lie.

Dans le domaine d'application de la présente invention, et notamment des documents FR-A-1 399 049 (MONSANTO COMPANY) et EP-A-0 018 558 (BAYER AG.), on connaît la réalisation de polymères fortement chargés en minéraux granulaires et greffés sur ceux-ci par un agent de pontage ou de liaison de type organo-silane. Cette technique, différente du procédé de l'invention, ne permet pas d'obtenir une composition liquide non polymérisée et stable.

A partir du document GB-A-2 090 602 (MITSUBISHI RAYON CO., LIMITED), on connaît, d'autre part, des compositions à base de charges minérales, d'acides organiques et de monomères polymérisables en dispersion dans l'eau sous atmosphère neutre. Toutefois, il est prévu que ces compositions polymérisent à chaud (environ 50°C) pendant des durées importantes (8 heures), en ne permettant que d'obtenir directement des polymères chargés, c'est-à-dire directement des compositions durcies polymérisées, sans permettre de séparer la réaction acide organique-charge minérale et la réaction de polymérisation en interrompant le cycle avant toute polymérisation. En d'autres termes, l'enseignement de ce document ne prévoit pas non plus l'obtention d'une composition liquide non polymérisée. A fortiori, aucun procédé visant à cela n'est envisagé.

Par ailleurs, de l'enseignement du document FR-A-2 273 040 (ICI - IMPERIAL CHEMICAL INDUSTRIES LIMITED) il est aussi connu des compositions liquides polymérisables qui comprennent une dispersion de particules d'une ou de plusieurs matières inorganiques dans un liquide organique polymérisable. Ce document divulgue également un procédé d'obtention de ces compositions, ainsi que leurs constituants. On notera, toutefois, que le procédé connu en cause consiste en un broyage mécanique des matières inorganiques en présence d'un environnement constitué par un liquide monomère et par un liant polymère. Ce procédé connu se caractérise donc par un accrochage chimique d'un dispersant polymère sur des charges inorganiques, cet accrochage s'effectuant grâce et pendant l'opération de broyage mécanique, et en l'absence de l'environnement prévu, aucun greffage chimique ne peut avoir lieu.

Au contraire, conformément à la présentation de l'invention qui a été faite, le présent mélange soumis au procédé de l'invention permet d'obtenir en un intervalle de temps beaucoup plus court, soit une composition liquide, éventuellement polymérisable, soit une composition solide polymérisée, et ce sans faire intervenir de polymère dispersant et sans nécessiter un moyen mécanique lourd de mise en oeuvre (tel que le broyage).

Concrètement, le mélange de l'invention conduit à des compositions aux propriétés au moins équivalentes, sinon améliorées par rapport à celles déjà connues. En outre ses applications sont plus étendues que celles jusqu'à présent proposées.

De façon plus spécifique, le mélange de l'invention utilisé pour l'obtention par greffage chimique d'une composition liquide comprend les composés suivants :
. une charge inorganique comprenant au moins un groupe hydroxylé,
. un acide organique carboxylique choisi parmi des acides polymérisables comportant une double liaison carbone-carbone en résonance avec la double liaison carbone-oxygène du groupe carboxylique,
. un solvant,
. un catalyseur radicalaire,
caractérisé en ce que la quantité de catalyseur radicalaire est telle que ledit catalyseur est entièrement consommé lors d'une réaction entre la charge inorganique et l'acide organique sans qu'une réaction de polymérisation soit déclenchée.

L'invention concerne également un procédé d'obtention par greffage chimique d'une composition liquide stable à partir du mélange défini ci-dessus, caractérisé en ce que le mélange est chauffé à une température à laquelle le catalyseur se décompose pour initier une réaction entre la charge inorganique et l'acide organique.

Ainsi, il est prévu de maintenir le couple température-durée de la réaction de fixation, et de choisir, de façon adaptée, le dosage du catalyseur de façon à déclencher la réaction de fixation en question sans induire la réaction de polymérisation.

Toujours suivant l'invention, si l'on désire néanmoins rendre durcissable la composition liquide obtenue, on propose un procédé caractérisé en ce que
a) on chauffe le mélange à une température à laquelle le catalyseur se décompose pour initier la réaction entre la charge inorganique et l'acide organique et,
b) on déclenche une réaction de polymérisation par ajout d'une quantité supplémentaire de catalyseur.
Dans ce cas, le mélange comprend alors un solvant qui est un monomère polymérisable.

Enfin, on notera que le procédé de l'invention prévoit que l'on peut obtenir, au cours ou après polymérisation, en ayant ajusté relativement précisément le dosage en acide organique, des liaisons ou des groupements acides libres ou disponibles, par exemple, pour un accrochage chimique sur une résine.

L'invention concerne également la composition liquide éventuellement durcissable obtenue à partir du mélange par le procédé qui vient d'être présenté.

L'invention, ses caractéristiques et avantages apparaîtront plus clairement de la description qui va suivre.

### 1 - Description physico-chimique

Tout d'abord on notera que le mécanisme que l'on va décrire convient pour des molécules organiques comprenant un groupement acide de type carboxylique associé à au moins une double liaison carbone-carbone.

On choisira l'acide organique de façon que cette double liaison soit en résonance avec la double liaison carbone-oxygène du groupement carboxylique.

Parmi les produits de base nécessaire à la mise en oeuvre du procédé de l'invention, outre au moins l'acide organique précité, on prévoit au moins une charge inorganique (minérale ou métallique) comprenant au moins un groupe hydroxylé, et on prévoit également un solvant, éventuellement polymérisable, ainsi qu'un catalyseur.

Conformément au procédé de l'invention, on soumet le mélange à des conditions de température déterminées. On va alors initier l'opération de greffage proprement dite dont on va présenter maintenant le mécanisme de réaction sous forme schématique à l'aide d'un exemple, avant d'en expliquer plus en détail le principe.

### Mécanisme de greffage

Dans l'exemple choisi, on prend comme acide, de l'acide méthacrylique.

On utilise le fait que dans la structure acide les liaisons C=C et C=0 sont en résonance.

Double réaction d'un radical (R) :

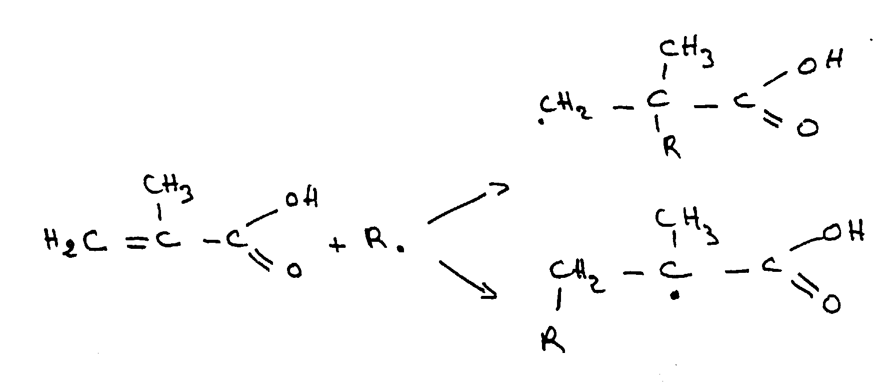

La réaction (1) conduit à une polymérisation radicalaire classique.

La réaction (2) conduit à un réarrangement de la molécule, tel que :

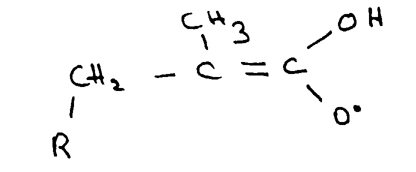

Le radical acide se trouve ainsi excité et peut facilement réagir sur un groupe hydroxyle R'OH pour donner : 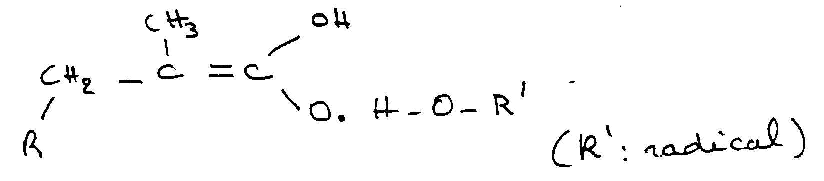 qui donne par réarrangement : 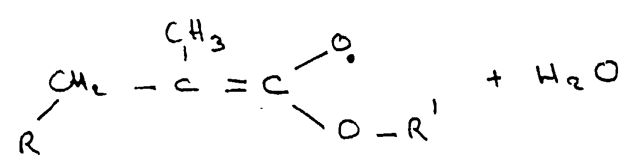 puis

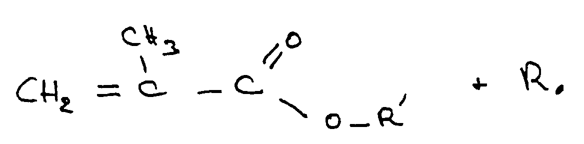

On a donc une réaction analogue à une réaction d'estérification, mais qui fait appel à un processus chimique différent.

Ceci peut être mis en évidence par l'absence de polymère après réaction, par la disparition de l'acide et par une variation des caractéristiques de viscosité.

### Explication du principe de l'opération de greffage

Tout d'abord, un radical obtenu par décomposition thermique du catalyseur, qui est du type de ceux utilisés pour initier une réaction radicalaire (diazo- ou peroxyde), vient exciter la double liaison carbone-carbone. On notera que cette réaction est du type de celle utilisée dans le cadre des polymérisations radicalaires.

La double liaison carbone-carbone étant en résonance avec la double liaison carbone-oxygène du groupement carboxylique associé, toute action sur l'une des doubles liaisons, va entraîner une réaction sur l'autre.

Par conséquent, le groupement carboxylique va se trouver dans un état excité lui permettant de réagir sur toute fonction hydroxylée, dans ce cas la charge inorganique à caractère basique ou amphotère.

En d'autres termes, on effectue un greffage chimique en fixant l'acide organique sur la charge inorganique par action radicalaire du catalyseur sur cet acide.

Habituellement, dans les procédés connus la réaction entre l'acide organique et la charge inorganique est en compétition au niveau de l'ordre des réactions avec celle classique de polymérisation, sans que l'on puisse les contrôler.

Au contraire, grâce au mélange et au procédé de l'invention on va pouvoir dissocier l'opération de polymérisation de l'opération de greffage et rendre cette dernière première dans l'ordre et facilement contrôlable.

A cet effet, on a ajusté dans le mélange la concentration en catalyseur par rapport aux autres produits utilisés et on a défini et maintenu, de façon relativement stricte, des conditions de température et de durée de la réaction de fixation.

Si l'on a pris soin dans des conditions de mise en oeuvre déterminées d'ajuster la concentration en catalyseur afin que celui-ci soit entièrement consommé lors de la réaction acide-base (charge inorganique-acide organique), cette dernière réaction n'est alors pas suivie de la réaction de polymérisation.

On obtient donc une composition non polymérisée que l'on peut stabiliser par tout moyen connu.

Si l'on désire toutefois obtenir à partir de cette composition liquide, une composition durcie, il faudra alors permettre à l'opération de polymérisation de s'effectuer.

Dans ce cas, on prendra soin de prévoir, parmi les produits de base déjà cités, outre un acide organique polymérisable, un solvant qui l'est également.

De plus, après qu'un intervalle de temps déterminé se soit écoulé après le début de la réaction de greffage entre l'acide organique et la charge inorganique, ou bien encore à l'issue de cette opération de greffage, après stabilisation de la composition liquide, on modifiera la concentration en catalyseur, en l'augmentant, de façon que tout le catalyseur ne soit pas consommé au cours de la réaction "acide-base" (c'est-à-dire la réaction de greffage), et qu'ainsi la polymérisation de la composition puisse s'effectuer.

Dans une application particulière et selon une caractéristique importante de l'invention, on prévoira également d'ajuster la concentration en monomère carboxylé (c'est-à-dire en acide organique) en fonction de l'état d'avancement de l'opération de greffage déclenché, de façon que cet acide organique, dans ce cas polymérisable, comporte encore des "sites réactifs" (c'est-à-dire des liaisons libres) non fixés sur la charge minérale, et ce même en fin d'opération de greffage. Ainsi, on pourra obtenir, au cours ou bien après polymérisation de la composition précitée, une composition comportant des liaisons ou des groupements libres ou disponibles permettant notamment l'adhésion par accrochage chimique selon un procédé connu de corps complémentaires adaptés.

L'adhésion pourra, par exemple, s'effectuer sur des fibres de verre ou encore notamment sur une résine organique de type polyester, acrylique ou phénolique.

Comme on le comprend, toute fibre comportant en surface et/ou dans sa composition au moins un composant hydroxylé, pourrait être retenue.

De façon à permettre la mise en oeuvre du procédé de l'invention, on comprendra que le groupement du support actif (c'est-à-dire la charge, minérale ou métallique, greffée) doit être compatible avec la « matrice » organique (c'est-à-dire le solvant monomère polymérisable compatible avec le groupement acide de type carboxylique choisi).

Le monomère polymérisable peut être n'importe quel monomère liquide du type par exemple méthacrylate, acrylate, vinylique, styrénique, phénolique, aromatique, aliphatique.

En ce qui concerne le choix de la charge inorganique, on prévoit qu'elle peut être du type pulvérulente, minérale ou métallique, à condition toutefois qu'elle présente sur sa surface ou dans sa composition des groupements hydroxylés permettant une fixation de l'acide organique.

L'acide organique ou monomère carboxylique choisi peut être de la famille des acides acrylique, méthacrylique, maléïque, et autres acides présentant une double liaison polymérisable compatible avec la matrice organique, c'est-à-dire avec le solvant monomère polymérisable.

### 2 - Description physique

On aura noté que la description chimique qui vient d'être faite de l'invention a permis notamment de réaliser, au cours de l'opération de greffage chimique, une estérification de groupements hydroxyles.

La ou les charges inorganiques choisies comprenant au moins un groupe hydroxylé, on a ainsi pu fixer au moins une molécule organique sur la charge minérale (ou métallique).

Physiquement, ceci s'est traduit par une modification de l'interface phase organique-phase minérale, qui a eu pour effet de rendre compatible la phase organique et la phase minérale, cette opération de "compatibilisation" ayant été appelée greffage chimique.

Toujours d'un point de vue physique, cette compatibilisation s'est concrétisée par une chute particulièrement importante de la viscosité, celle-ci pouvant, dans certains cas, passer de plus de 5 Pa.s à moins de 3.10⁻¹ Pa.s. La composition obtenue est particulièrement fluide compte tenu du taux important de la phase minérale qui peut aller jusqu'à environ 93 parties de charge pour environ 7 parties de phase organique en poids.

Comme on l'a vu précédemment, si l'on a pris soin de prévoir un acide organique polymérisable ainsi qu'un solvant polymérisable, et en ayant ajusté convenablement le dosage des différents produits, notamment la concentration en acide organique et en catalyseur, on va pouvoir, dans une seconde étape ultérieure au greffage, permettre à l'opération de polymérisation de s'effectuer. Cette polymérisation pourra, suivant l'application choisie, s'effectuer en couches fines ou en masse, à chaud ou à froid. On considère qu'une polymérisation en couches se réalise sur des épaisseurs inférieures à 1 mm environ.

On a également vu que l'on pouvait, toujours par un dosage approprié en acide carboxylique, obtenir une composition offrant des liaisons ou des groupements acides libres sur lesquels pourra se fixer ou s'accrocher chimiquement une résine ou encore des fibres.

Physiquement, et de façon plus précise, en venant faire adhérer sur ces sites disponibles des fibres de renfort par imprégnation au cours de la polymérisation, on pourra alors réaliser un "composite" à haute dureté et à grande résistance mécanique.

En venant faire adhérer en surface, après polymérisation, une résine de type polyester acrylique ou encore phénolique, on obtiendra un gel-coat de bel aspect et offrant une grande dureté de surface.

Eventuellement, on pourrait prévoir de réaliser sur la base de la composition durcie de l'invention une structure composite revêtue d'un tel gel-coat.

D'une façon générale, les compositions durcies obtenues grâce au procédé de l'invention offrent des caractéristiques de résistance mécanique élevées. Des essais menés indiquent 11 500 MPa de module d'élasticité en flexion, 90 MPa de module de rupture en flexion et une résistance à la rayure "TABER" sensiblement équivalente à celle des revêtements mélaminés.

En outre, les structures composites pouvant être obtenues après polymérisation offrent des caractéristiques mécaniques et de dureté superficielles nettement supérieures à celles des matériaux composites connus actuellement. En effet, la composition de l'invention avant polymérisation étant très fluide, elle peut aisément imprégner en tant que matrice des fibres de renfort.

En ce qui concerne la mise en oeuvre des compositions que l'on vient de décrire, on notera que l'on peut envisager une technique par coulée, par injection ou encore par projection au pistolet.

Le domaine d'utilisation et les applications éventuelles des compositions obtenues sont multiples et d'un grand intérêt industriel.

Projetée ou coulée en faible épaisseur, il est possible de réaliser des gel-coat ou des peintures de grande dureté.

En imprégnation de fibres de renfort (telles que des fibres de verre), on peut obtenir des "composites" très légers et très rigides pouvant polymériser à froid ou à chaud, ces composites pouvant être mis en oeuvre par contact, injection ou tout autre procédé connu.

Par coulée en masse on peut réaliser des moulages d'une grande finesse. La composition obtenue n'adhérant pas sur le verre, on peut la couler entre deux parois de verre et ainsi obtenir des plaques résistantes de bel aspect.

Il est ainsi possible de réaliser notamment des produits pour le bâtiment tels que des bardages, couvertures, appareils sanitaires, revêtements de sols et de murs, parements de pièces préfabriquées en béton hydraulique, ou encore parements de panneaux "sandwich" moulés en forme.

En utilisant en tant que charge minérale des granulés ou des poudres telles qu'une poudre de marbre ou de différentes roches, on pourrait obtenir du marbre de synthèse ou encore de la pierre reconstituée utilisable sur des toitures ou en bardage lozes ou encore ardoises.

On pourrait également en utilisant des produits minéraux aisément disponibles à proximité des lieux de mise en oeuvre et d'exploitation de l'invention, tels qu'en particulier des dérivés de l'alumine comme la latérite, constituer des matériaux très performants, par exemple pour la construction dans les pays en voie de développement.

On va maintenant présenter, à titre d'exemple non limitatif, quelques comptes-rendus d'essais qui ont été menés dans le cadre du procédé de l'invention.

### Exemple 1.

On mélange environ 70 grammes de silice en poudre (tel que par exemple FARCIL 44®, marque déposée de la Société SANSON), 25 grammes de méthacrylate de méthyle et 5 grammes d'acide méthacrylique. On porte ce mélange à une température voisine de 60°C et on ajoute environ 5 milligrammes de catalyseur (tel que du peroxyde de benzoïle, par exemple). Au bout d'un temps compris sensiblement entre 10 et 30 minutes, on constate une chute spectaculaire de la viscosité. Le mélange est alors refroidi et stabilisé avec environ 0,1 milligramme d'hydroquinone. La composition obtenue est liquide et non polymérisée.

### Exemple 2.

On réalise à nouveau la même composition que dans l'exemple 1, en remplaçant toutefois la silice par de l'alumine pulvérulente susceptible d'être hydratée.

La composition obtenue est à nouveau catalysée par environ 1 gramme de peroxyde de benzoïle et accélérée par environ 0,2 gramme de diméthyl-paratoluidine. On ajoute alors sensiblement 0,1 gramme de paraffine ayant un point de fusion d'environ 58°C. La composition est ensuite étalée sur une paroi de verre et polymérisée. On obtient un film blanc, dur et d'un bel aspect.

### Exemple 3.

On mélange environ 80 grammes de poudre d'aluminium, 15 grammes de méthacrylate de méthyle, 4,5 grammes d'acide méthacrylique. Le mélange est porté à une température sensiblement égale à 60°C et on ajoute 5 milligrammes de catalyseur (par exemple peroxyde de benzoïle ou catalyseur azoïque).

Après environ 30 minutes, le mélange devient fluide. On refroidit alors et on stabilise avec sensiblement 0,1 milligramme d'hydroquinone. La composition obtenue est liquide et non encore polymérisée. On catalyse alors à nouveau, comme dans l'exemple 2. Le produit obtenu après polymérisation est dur et on peut remarquer qu'il conduit le courant électrique.

### Exemple 4

Une composition comme celle de l'exemple 2 est réalisée et permet, par imprégnation de fibres de verre d'obtenir un produit polymérisé dur offrant un bel aspect de surface et une grande résistance aux chocs.

## Revendications

1. Mélange comprenant les composés suivants :
- une charge inorganique qui comporte au moins un groupe hydroxylé,
- un acide organique carboxylique choisi parmi des acides polymérisables comportant une double liaison carbone-carbone en résonance avec la double liaison carbone-oxygène du groupe carboxylique,
- un solvant, et
- un catalyseur radicalaire,
caractérisé en ce que la quantité de catalyseur radicalaire est telle que ledit catalyseur est entièrement consommé lors d'une réaction entre la charge inorganique et l'acide organique sans qu'une réaction de polymérisation soit déclenchée.

2. Mélange selon la revendication 1,
caractérisé en ce que la quantité d'acide organique est telle que tout l'acide organique réagit par combinaison avec la charge inorganique.

3. Mélange selon l'une des revendications 1 et 2,
caractérisé en ce que le catalyseur est un peroxyde de benzoyle ou un catalyseur diazoïque.

4. Mélange selon l'une des revendications 1 à 3,
caractérisé en ce que le solvant est un monomère polymérisable.

5. Procédé d'obtention d'une composition liquide stable à partir du mélange selon l'une des revendications 1 à 4,
caractérisé en ce que le mélange est chauffé à une température à laquelle le catalyseur se décompose pour initier une réaction entre la charge inorganique et l'acide organique.

6. Procédé selon la revendication 5,
caractérisé en ce que l'on chauffe ledit mélange jusqu'à une température voisine de 60°C.

7. Procédé d'obtention d'une composition solide polymérisée à partir du mélange selon la revendication 4,
caractérisé en ce que :
a) on chauffe le mélange à une température à laquelle le catalyseur se décompose pour initier la réaction entre la charge inorganique et l'acide organique, et
b) on déclenche une réaction de polymérisation par ajout d'une quantité supplémentaire de catalyseur.

8. Procédé selon la revendication 7,
caractérisé en ce que le mélange au cours de l'étape a) est chauffé jusqu'à une température de 60°C.

9. Procédé selon l'une des revendications 7 et 8,
caractérisé en ce qu'on prévoit un excès de concentration en acide organique par rapport à la concentration nécessaire et suffisante pour la réaction de fixation, de façon à obtenir, au cours et/ou après polymérisation, une composition dont une partie de l'acide organique comporte des liaisons résiduelles non fixées sur la charge inorganique.

10. Procédé selon l'une des revendications 7 à 9,
caractérisé en ce qu'on prévoit au cours de la polymérisation que la composition polymérisable imprègne des fibres de renfort, telle que des fibres de verre.

11. Procédé selon l'une des revendications 9 et 10,
caractérisé en ce qu'on effectue, après polymérisation, une fixation ou accrochage chimique d'une résine sur les liaisons réactives résiduelles de l'acide organique.

12. Composition liquide moulable,
caractérisée en ce qu'elle est obtenue par le procédé selon l'une des revendications 5 et 6.

## Patentansprüche

1. Mischung, enthaltend die folgenden Bestandteile:
- einen anorganischen Füllstoff, der wenigstens eine Hydroxylgruppe enthält,
- eine organische Carbonsäure, die aus polymerisationsfähigen Säuren mit einer Kohlenstoff-KohlenstoffDoppelbindung in Resonanz mit der Kohlenstoff-Sauerstoff-Doppelbindung der Carboxylgruppe ausgewählt wird,
- ein Lösungsmittel und
- einen radikalischen Katalysator,
**dadurch gekennzeichnet**, daß die Menge des radikalischen Katalysators so bemessen ist, daß der besagte Katalysator bei einer Reaktion zwischen dem anorganischen Füllstoff und der organischen Säure vollständig verbraucht wird, ohne daß eine Polymerisationsreaktion ausgelöst wird.

2. Mischung nach Anspruch 1,
**dadurch gekennzeichnet**, daß die Menge der organischen Säure so bemessen ist, daß die gesamte organische Säure durch Verbindung mit dem anorganischen Füllstoff reagiert.

3. Mischung nach einem der Ansprüche 1 und 2,
**dadurch gekennzeichnet**, daß der Katalysator ein Benzoylperoxyd oder ein Diazokatalysator ist.

4. Mischung nach einem der Ansprüche 1 bis 3,
**dadurch gekennzeichnet**, daß das Lösungsmittel ein polymerisationsfähiges Monomer ist.

5. Verfahren zur Herstellung einer stabilen flüssigen Zusammensetzung aus der Mischung nach einem der Ansprüche 1 bis 4,
**dadurch gekennzeichnet**, daß die Mischung auf eine Temperatur erhitzt wird, bei welcher der Katalysator zerfällt, um eine Reaktion zwischen dem anorganischen Füllstoff und der organischen Säure einzuleiten.

6. Verfahren nach Anspruch 5,
**dadurch gekennzeichnet**, daß die besagte Mischung bis auf eine Temperatur von etwa 60°C erhitzt wird.

7. Verfahren zur Herstellung einer festen Polymerisatzusammensetzung aus der Mischung nach Anspruch 4,
**dadurch gekennzeichnet**, daß:
a) die Mischung auf eine Temperatur erhitzt wird, bei welcher der Katalysator zerfällt, um die Reaktion zwischen dem anorganischen Füllstoff und der organischen Säure einzuleiten, und
b) eine Polymerisationsreaktion durch die Beimischung einer zusätzlichen Katalysatormenge ausgelöst wird.

8. Verfahren nach Anspruch 7,
**dadurch gekennzeichnet**, daß die Mischung bei Schritt a) bis auf eine Temperatur von 60°C erhitzt wird.

9. Verfahren nach einem der Ansprüche 7 und 8,
**dadurch gekennzeichnet**, daß ein Konzentrationsüberschuß an anorganischer Säure im Verhältnis zur notwendigen und hinreichenden Konzentration für die Anlagerungsreaktion vorgesehen ist, um bei und/oder nach der Polymerisation eine Zusammensetzung zu erhalten, bei der ein Teil der organischen Säure nicht an dem anorganischen Füllstoff angelagerte Restbindungen enthält.

10. Verfahren nach einem der Ansprüche 7 bis 9,
**dadurch gekennzeichnet**, daß bei der Polymerisation vorgesehen ist, daß die polymerisationsfähige Zusammensetzung Verstärkungsfasern, etwa Glasfasern, imprägniert.

11. Verfahren nach einem der Ansprüche 9 und 10,
**dadurch gekennzeichnet,** daß im Anschluß an die Polymerisation eine chemische Bindung oder Anlagerung der reaktiven Restbindungen der organischen Säure erfolgt.

12. Formbare flüssige Zusammensetzung,
**dadurch gekennzeichnet**, daß sie durch das Verfahren nach einem der Ansprüche 5 und 6 hergestellt wird.

## Claims

1. Mixture comprising following compounds :
- an inorganic filler which comprises at least one hydroxylated group ;
- an organic carboxylic acid selected from polymerizable acids comprising a carbon-carbon double bond in resonance with the carbon-oxygen double bond of the carboxylic group,
- a solvent and
- a radical-forming catalyst,
characterized in that the amount of radical-forming catalyst is such that said catalyst is entirely consumed during a reaction between the inorganic filler and the organic acid without a polymerization reaction being started.

2. Mixture according to claim 1,
characterized in that the amount of organic acid is such that all the organic acid reacts by combination with the inorganic filler.

3. Mixture according to one of claims 1 and 2,
characterized in that the catalyst is a benzoyl peroxide or a diazoic catalyst.

4. Mixture according to one of claims 1 to 3,
characterized in that the solvent is a polymerizable monomer.

5. Method for obtaining a stable liquid composition starting from the mixture according to one of claims 1 to 4,
characterized in that the mixture is heated at a temperature at which the catalyst decomposes to initiate a reaction between the inorganic filler and the organic acid.

6. Method according to claim 5,
characterized in that said mixture is heated up to a temperature near 60°C.

7. Method for obtaining a polymerized solid composition starting from the mixture according to claim 4,
characterized in that :
a) the mixture is heated at a temperature at which the catalyst decomposes to initiate the reaction between the inorganic filler and the organic acid, and
b) a polymerization reaction is started by addition of an additional amount of catalyst.

8. Method according to claim 7,
characterized in that the mixture is heated up to a temperature of 60°C during step a).

9. Method according to one of claims 7 and 8,
characterized in that there is provided for an excess concentration of organic acid with respect to the necessary concentration and sufficient for the fixation reaction in such a way to obtain during and/or after polymerization a composition of which a part of the organic acid includes residual bonds not fixed on the inorganic filler.

10. Method according to one of claims 7 to 9,
characterized in that there is provided during the polymerization that the polymerizable composition impregnates reinforcing fibers such as glass fibers.

11. Method according to one of claims 9 and 10,
characterized in that there is executed after polymerization a chemical fixation or attachment of a resin on the residual reactive bonds of the organic acid.

12. Liquid moldable composition,
characterized in that it is obtained by the method according to one of claims 5 and 6.
